# FASCICULE DE BREVET EUROPEEN

(11) **EP 1 535 553 B1**
(45) Date de publication et mention de la délivrance du brevet: **24.01.2007**
(21) Numéro de dépôt: 04356187.7
(22) Date de dépôt: 26.11.2004
(51) Int. Cl.: A47J 27/092, A47J 27/08

(54) **Appareil de cuisson sous pression à organe de commande unique pour la décompression et le verrouillage / déverrouillage**
Druckgargerät mit einzelner Entspannungs- und Verriegelungsvorrichtung
Pressure cooker with unique actuation device for the decompression and the locking/unlocking

(30) Priorité: 27.11.2003 FR 0313937
(43) Date de publication de la demande: 01.06.2005
(73) Titulaire: SEB S.A., 69132 Ecully Cedex (FR)
(72) Inventeur: Seurat Guiochet, Claire Marie-Aurore, 21000 Dijon (FR); Chameroy, Eric, 21260 Veronnes (FR); Anota, Daniel Jean-Marie, 21000 Dijon (FR)
(74) Mandataire: Martin, Didier Roland Valéry

(56) Documents cités:
- US-A- 4 423 825
- US-A- 4 717 041
- US-A- 6 019 029
- US-A1- 2003 116 578
- US-B1- 6 425 320

## Description

La présente invention se rapporte au domaine technique général des appareils domestiques de cuisson sous pression comprenant une cuve et un couvercle destiné à être verrouillé sur la cuve pour former une enceinte de cuisson sensiblement étanche, lesdits appareils étant destinés à assurer la cuisson sous pression de vapeur des aliments contenus dans la cuve.

La présente invention concerne plus particulièrement un appareil domestique de cuisson d'aliments sous pression comprenant :
- une cuve et un couvercle destiné à être rapporté et verrouillé sur ladite cuve pour former une enceinte de cuisson sensiblement étanche,
- un moyen de verrouillage / déverrouillage susceptible d'évoluer entre une position de verrouillage du couvercle relativement à la cuve et une position de déverrouillage,
- un moyen de décompression de l'enceinte, activable quel que soit le niveau de pression régnant dans l'enceinte.

On connaît déjà des récipients de cuisson sous pression comprenant une cuve et un couvercle destiné à être verrouillé sur la cuve par l'intermédiaire d'un moyen de verrouillage / déverrouillage susceptible d'évoluer entre une position de verrouillage du couvercle et une position de déverrouillage.

Ces appareils connus sont également généralement dotés d'un moyen de décompression permettant de faire chuter la pression au sein de l'appareil, notamment en fin de processus de cuisson, pour ouvrir le couvercle dans des conditions de sécurité acceptables pour l'utilisateur.

Le document US-6019029 décrit un appareil domestique de cuisson d'aliments sous pression à mâchoires.

Pour ces appareils connus, le passage du moyen de verrouillage / déverrouillage de sa position de verrouillage à sa position de déverrouillage (et vice-versa) est piloté par un premier organe de commande, lequel comprend par exemple deux boutons poussoirs correspondant respectivement à l'opération de verrouillage et à l'opération de déverrouillage.

Quant à la commande du moyen de décompression, elle est effectuée à l'aide d'un deuxième organe de commande distinct du premier organe de commande pilotant le moyen de verrouillage / déverrouillage. Ce deuxième organe peut par exemple se présenter sous la forme d'une bague rotative.

Cette multiplicité d'organes de commande rend le maniement des autocuiseurs connus peu ergonomique, en particulier pour l'utilisateur habitué à cuisiner à l'aide de marmites classiques fonctionnant à pression atmosphérique.

En effet, contrairement à l'utilisateur de telles marmites, l'utilisateur d'un autocuiseur doit, pour séparer le couvercle de la cuve à l'issue d'un cycle de cuisson, procéder à plusieurs manipulations distinctes selon une séquence préétablie.

Ainsi, l'utilisateur d'un autocuiseur de l'art antérieur, qui voudrait ouvrir l'autocuiseur à la fin de la cuisson, doit tout d'abord actionner en rotation le deuxième organe de commande pour activer le moyen de décompression, puis, une fois la décompression achevée, actionner en translation le premier organe de commande, distinct du deuxième organe de commande, afin de déverrouiller le couvercle.

Cette séquence d'opérations distinctes, outre le fait qu'elle doit être mémorisée par l'utilisateur, est d'autant plus contraignante qu'elle oblige l'utilisateur des autocuiseurs classiques à connaître la fonction des divers boutons et curseurs de commande présents sur l'autocuiseur, ce qui est loin d'être toujours facile et intuitif.

De surcroît, la multiplicité et la diversité des organes de commande présents sur un autocuiseur classique engendre des conceptions mécaniques relativement complexes, mettant en jeu de nombreuses pièces mobiles, ce qui peut conduire à des risques d'usure et de grippage non négligeables, ainsi qu'à des problèmes de fiabilité.

Les objets assignés à l'invention visent en conséquence à porter remède aux divers inconvénients énumérés précédemment et à proposer un nouvel appareil domestique de cuisson d'aliments sous pression, dont l'utilisation est particulièrement simple et intuitive.

Un autre objet de l'invention vise à proposer un nouvel appareil domestique de cuisson d'aliments sous pression dont l'utilisation est extrêmement ergonomique.

Un autre objet de l'invention vise à proposer un nouvel appareil domestique de cuisson d'aliments sous pression qui limite les possibilités pour l'utilisateur de commettre des erreurs dans son maniement.

Un autre objet de l'invention vise à proposer un nouvel appareil domestique de cuisson d'aliments sous pression dont la conception et le montage sont simplifiés.

Un autre objet de l'invention vise à proposer un nouvel appareil domestique de cuisson d'aliments sous pression dont la conception est particulièrement compacte.

Un autre objet de l'invention vise à proposer un nouvel appareil domestique de cuisson d'aliments sous pression présentant un excellent niveau de sécurité à l'utilisation.

Un autre objet de l'invention vise à proposer un nouvel appareil domestique de cuisson d'aliments sous pression procurant un excellent compromis en termes de rapidité de cuisson et de rapidité de décompression.

Un autre objet de l'invention vise à proposer un nouvel appareil domestique de cuisson d'aliments sous pression qui présente un excellent compromis en termes de rapidité de cuisson, de souplesse d'utilisation et de sécurité.

Les objets assignés à l'invention sont atteints à l'aide d'un appareil domestique de cuisson d'aliments sous pression comprenant :
- une cuve et un couvercle destiné à être rapporté et verrouillé sur ladite cuve pour former une enceinte de cuisson sensiblement étanche,
- un moyen de verrouillage / déverrouillage à mâchoires ou segments, susceptible d'évoluer entre une position de verrouillage du couvercle relativement à la cuve et une position de déverrouillage,
- un moyen de décompression de l'enceinte, activable quel que soit le niveau de pression régnant dans l'enceinte,
caractérisé en ce que lesdits moyen de verrouillage / déverrouillage et moyen de décompression sont chacun reliés fonctionnellement à un organe de commande unique et commun, ledit organe de commande permettant de commander le verrouillage / déverrouillage du couvercle sur la cuve ainsi que la décompression de l'enceinte.

D'autres particularités et avantages de l'invention apparaîtront et ressortiront plus en détails à la lecture de la description faite ci-après, en référence aux dessins annexés, donnés à titre d'exemple illustratif et non limitatif dans lesquels :
- La figure 1 montre, selon une vue générale en perspective, un appareil domestique de cuisson conforme à l'invention.
- La figure 2 illustre, selon une vue en perspective, un détail de réalisation du moyen de verrouillage / déverrouillage du couvercle d'un appareil de cuisson conforme à l'invention.
- La figure 3 illustre, selon une vue en perspective, un détail de réalisation de l'organe de commande d'un appareil de cuisson conforme à l'invention.
- La figure 4 illustre, selon une autre vue en perspective, le détail de réalisation représenté à la figure 3.
- La figure 5 illustre, selon une vue de dessus, le détail de réalisation représenté aux figures 3 et 4.

L'appareil de cuisson conforme à l'invention est destiné à assurer la cuisson de différents aliments sous pression dans un contexte domestique.

L'appareil conforme à l'invention est donc un ustensile de cuisine présentant un caractère portatif (c'est à dire déplaçable manuellement) et indépendant.

De façon classique, l'appareil conforme à l'invention est conçu pour monter en pression exclusivement sous l'effet d'une source de chauffe (embarquée ou externe), sans apport de pression externe.

De façon préférentielle, l'appareil de cuisson conforme à l'invention est un autocuiseur.

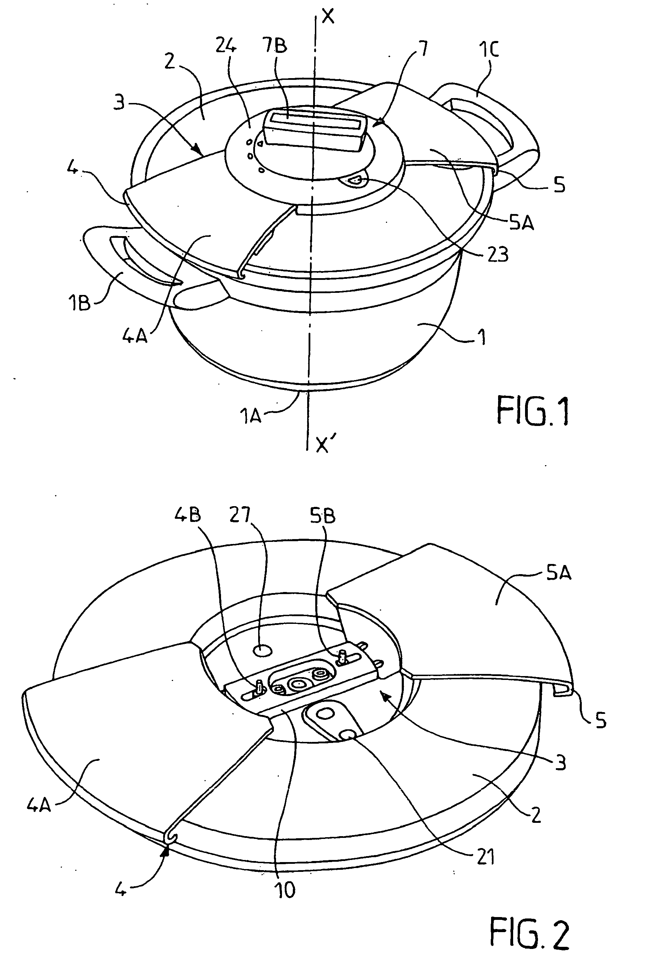

De façon classique, l'appareil de cuisson conforme à l'invention comprend une cuve 1 formant récipient de cuisson et présentant de façon préférentielle sensiblement une symétrie de révolution selon un axe X-X' (cf. figure 1).

Par la suite, l'adjectif « *axial* » se référera à la direction de cet axe de symétrie X-X', direction qui s'apparente à la direction verticale lorsque l'appareil est en fonctionnement normal.

La cuve 1 est de manière classique fabriquée à partir d'un matériau métallique tel que l'acier inoxydable, et est par exemple pourvue d'un fond thermo-conducteur 1A solidarisé à la cuve par exemple par frappe à chaud.

La cuve 1 peut comporter également des organes de préhension, telles que des poignées 1B, 1C, préférentiellement au nombre de deux, et fixés sur la cuve 1 de façon diamétralement opposée par exemple (cf. figure 1).

L'appareil conforme à l'invention comprend également un couvercle 2 destiné à être rapporté et verrouillé sur ladite cuve 1 pour former une enceinte de cuisson sensiblement étanche, c'est-à-dire suffisamment hermétique pour permettre une montée en pression de l'appareil.

Le couvercle 2 est avantageusement de forme générale discoïde, son diamètre général pouvant par exemple être de l'ordre de 26 cm, ce qui correspond au standard en vigueur en matière de faitouts.

Le couvercle 2 peut être verrouillé ou déverrouillé sur la cuve 1 grâce à un moyen de verrouillage / déverrouillage 3 du couvercle 2 relativement à la cuve 1 (représenté en particulier à la figure 2).

Le moyen de verrouillage / déverrouillage 3 peut être de tout type connu de l'homme du métier, et est de façon classique susceptible d'évoluer entre une position de verrouillage du couvercle 2 relativement à la cuve 1, dans laquelle le couvercle est solidarisé à la cuve, et une position de déverrouillage du couvercle 2 relativement à la cuve 1, dans laquelle le couvercle peut être séparé de la cuve.

De façon avantageuse, le moyen de verrouillage / déverrouillage 3 est agencé pour que les positions de verrouillage / déverrouillage soient des positions prédéterminées, c'est-à-dire que le moyen de verrouillage / déverrouillage 3 est conçu pour évoluer nominalement de façon discrète entre une position de verrouillage unique et une position de déverrouillage unique.

A titre d'exemple d'un tel moyen de verrouillage / déverrouillage à positions de verrouillage et de déverrouillage prédéterminées utilisable dans le cadre de l'invention, on peut citer par exemple les moyens de verrouillage / déverrouillage à mâchoires (ce qui correspond à la variante représentée aux figures), à segments, ou à baïonnettes.

Le moyen de verrouillage / déverrouillage 3 n'est cependant pas limité à un moyen agencé pour que les positions de verrouillage et de déverrouillage soient des positions prédéterminées. Il est ainsi envisageable, sans pour autant sortir du cadre de l'invention, que le moyen de verrouillage / déverrouillage 3 soit agencé pour que les positions de verrouillage et de déverrouillage ne soient pas préétablies, ce qui est le cas par exemple de certains moyens de verrouillage / déverrouillage mettant en jeu un serrage progressif du couvercle relativement à la cuve (systèmes à étriers classiques, par exemple).

Avantageusement, le moyen de verrouillage / déverrouillage 3 de l'appareil conforme à l'invention comprend au moins un élément de verrouillage 4, 5 du couvercle 2 relativement à la cuve 1, ledit au moins un élément de verrouillage 4, 5 étant monté mobile sensiblement en translation radiale relativement au couvercle 2, par l'intermédiaire d'un moyen d'entraînement correspondant 4A, 5A, entre la position, de préférence préétablie, de verrouillage, et la position, de préférence préétablie, de déverrouillage.

Avantageusement, ledit au moins un élément de verrouillage 4, 5 comprend une mâchoire destinée à enserrer les bords périphériques de cuve 2 et de couvercle 1.

Ladite mâchoire peut se présenter sous la forme d'une plaque métallique, profilée en U à son extrémité extérieure, tel que cela est bien connu de l'homme du métier.

De façon préférentielle, l'appareil conforme à l'invention comprendra deux éléments de verrouillage, constitués par des mâchoires 4, 5, lesdites mâchoires étant positionnées en vis-à-vis, de manière diamétralement opposée en regard de l'axe de symétrie général X-X' de l'appareil (cf. figures 1 et 2).

Avantageusement, le moyen d'entraînement 4A, 5A pour chaque mâchoire 4, 5 pourra consister en un bras entraîneur correspondant, lequel bras entraîneur peut par exemple venir de matière avec la mâchoire correspondante 4, 5, tel que cela est représenté aux figures 1 et 2.

Le moyen de verrouillage / déverrouillage 3 du couvercle 2 relativement à la cuve 1 n'est cependant pas limité à un système à mâchoires et peut par exemple reposer sur un principe de verrouillage à segments. Tel que cela est bien connu de l'homme du métier, un moyen de verrouillage / déverrouillage à segments consiste en la coopération, à la manière d'un système pêne / gâche, de barrettes mobiles en translation solidaire du couvercle et de lumières complémentaires correspondantes ménagées dans la paroi de la cuve. En position de verrouillage, les barrettes sont engagées dans les lumières correspondantes pour empêcher tout mouvement du couvercle, tandis qu'en position de déverrouillage les barrettes sont rétractées et ne coopèrent pas avec les lumières.

Avantageusement, l'appareil de cuisson domestique conforme à l'invention comprend un moyen de régulation de pression 6 monté en communication étanche avec un perçage 27 ménagé dans le couvercle 2, et agencé pour maintenir la pression relative (c'est-à-dire la pression mesurée au-dessus de la pression atmosphérique) régnant dans l'enceinte à une valeur prédéterminée sensiblement constante, dite pression de fonctionnement.

Le principe de fonctionnement général d'un tel moyen de régulation 6 est bien connu de l'homme du métier.

Ainsi, de façon classique, le moyen de régulation de pression 6 comprend une soupape de régulation sensible à la pression régnant dans l'enceinte. Ladite soupape de régulation est montée mobile entre au moins :
- une position de butée et de rappel élastique, dite position d'étanchéité, dans laquelle elle ferme la communication de l'enceinte avec l'extérieur tant que la pression régnant dans l'enceinte est sensiblement inférieure ou égale à la pression de fonctionnement,
- et au moins une position de fuite, dans laquelle elle met en communication l'intérieur de l'enceinte avec l'extérieur dès que la pression à l'intérieur de l'enceinte dépasse la pression de fonctionnement.

De façon classique, une soupape de régulation de pression peut présenter plusieurs positions de fuite, et parmi elles une position extrémale de fuite qui est une position de butée, la distance séparant la position de rappel élastique de la position de fuite constituant la course maximum de la soupape de régulation.

Une telle soupape de régulation de pression vise ainsi à obtenir un maintien de la pression au sein de l'enceinte aux alentours d'un niveau nominal prédéterminé lorsque l'appareil a quitté son régime transitoire de montée en pression, et a atteint son régime stationnaire de fonctionnement.

Le moyen de régulation de pression 6 pourra être classiquement constitué par une soupape à poids ou à ressort de compression, montée mobile dans un puits entre une position basse d'étanchéité et une ou plusieurs position(s) haute(s) de fuite.

Tel que cela est bien connu de l'homme du métier, le moyen de régulation de pression 6 peut également être pourvu d'un système de tarage permettant à l'utilisateur de sélectionner une valeur de pression de cuisson prédéterminée parmi un choix de plusieurs niveaux de pression de fonctionnement, via un organe de sélection de pression, en fonction par exemple de la nature des aliments présents dans l'appareil de cuisson.

Avantageusement, le moyen de régulation de pression 6 est conçu pour que la pression de fonctionnement soit comprise dans une plage s'étendant sensiblement entre 10 et 30 kPa, et soit de préférence sensiblement égale à 20 kPa.

Le demandeur a en effet établi que la sélection d'une pression de fonctionnement dans la plage 10-30 kPa permet un excellent compromis entre d'une part la durée de cuisson et d'autre part la durée de décompression de l'appareil lorsque l'on veut passer de la pression de fonctionnement à une pression moindre compatible avec une ouverture du couvercle dans des conditions acceptables de sécurité pour l'utilisateur.

L'invention n'est cependant pas limitée à un niveau de pression de fonctionnement particulier, et pourra être mise en oeuvre quel que soit le niveau de pression de fonctionnement.

Conformément à l'invention, l'appareil domestique de cuisson comprend également un moyen de décompression activable / désactivable, agencé pour autoriser, lorsqu'il est activé, une chute de la pression régnant dans l'enceinte en vue de pouvoir ouvrir ultérieurement le couvercle, c'est-à-dire faire passer le moyen de verrouillage / déverrouillage de sa position de verrouillage à sa position de déverrouillage.

A cette fin, le moyen de décompression est activable quel que soit le niveau de pression régnant dans l'enceinte, et en particulier est activable lorsque ce niveau de pression correspond à la pression de fonctionnement de l'appareil de cuisson conforme à l'invention.

Les fonctions du moyen de décompression sont donc notamment les suivantes :
- lorsque le moyen de décompression est désactivé, le moyen de décompression n'autorise sensiblement aucune fuite de vapeur de l'intérieur de l'enceinte vers l'extérieur ;
- lorsque le moyen de décompression est activé, il met en communication l'intérieur de l'enceinte avec l'extérieur, de façon à créer une fuite de vapeur engendrant une diminution de la pression régnant à l'intérieur de l'enceinte, ladite pression évoluant d'une première valeur correspondant à la pression de fonctionnement à une deuxième valeur moins élevée, compatible avec le déverrouillage du couvercle dans des conditions de sécurité acceptables pour l'utilisateur.

Le moyen de décompression pourra consister en tout moyen classique connu de l'homme du métier.

Le moyen de décompression sera en particulier conformé et dimensionné de manière à permettre une décompression sans projection dangereuse de matières de cuisson (aliments, liquides de cuisson) brûlantes vers l'extérieur.

Conformément à une caractéristique importante de l'invention, le moyen de verrouillage / déverrouillage 3 et le moyen de décompression sont chacun reliés fonctionnellement à un organe de commande 7 unique et commun, ledit organe 7 permettant de commander le verrouillage / déverrouillage du couvercle 2 sur la cuve 1 ainsi que la décompression de l'enceinte.

En d'autres termes, l'activation et la désactivation du moyen de décompression, ainsi que le passage du moyen de verrouillage / déverrouillage de sa position de verrouillage à sa position de déverrouillage (et vice-versa), sont commandés par strictement le même organe de commande, ce qui signifie que l'utilisateur de l'autocuiseur peut, avec une opération gestuelle de nature unique (par exemple tourner une poignée ou appuyer sur un bouton), commander à la fois la décompression (et ce quel que soit le niveau de pression régnant dans l'enceinte) et le verrouillage / déverrouillage.

Avantageusement, l'organe de commande 7 est conçu pour être susceptible de se trouver dans une position prédéterminée de verrouillage et décompression, dans laquelle ledit organe de commande 7 coopère avec le moyen de verrouillage / déverrouillage 3 et le moyen de décompression, de façon à ce que le moyen de verrouillage / déverrouillage 3 se trouve dans sa position de verrouillage, tandis que le moyen de décompression est activé.

En d'autres termes, les moyens de verrouillage / déverrouillage, de décompression et l'organe de commande unique 7 sont agencés pour coopérer de façon à ce que l'utilisateur puisse, en manipulant l'organe de commande unique 7, commander l'activation de la décompression tout en conservant un verrouillage complet de l'appareil.

Par verrouillage complet, on désigne le fait que le moyen de verrouillage est strictement dans la position de verrouillage dans laquelle il était placé durant l'opération de cuisson.

Dans le cas d'un moyen de verrouillage / déverrouillage 3 agencé pour que les positions de verrouillage et de déverrouillage soient des positions prédéterminées, la position de verrouillage et décompression de l'organe de commande 7 correspond à la position prédéterminée de verrouillage du moyen de verrouillage / déverrouillage 3.

Dans le cas où le moyen de verrouillage / déverrouillage 3 présente un caractère plutôt continu (par exemple moyen de verrouillage / déverrouillage à système de serrage progressif, dans le cas d'un autocuiseur à étriers), la position prédéterminée de verrouillage et décompression de l'organe de commande 7 correspond à un maintien strict du moyen de verrouillage / déverrouillage dans la position de verrouillage (correspondant à un niveau de serrage) dans laquelle il était placé en vue de réaliser l'opération de cuisson.

Tel que cela a été exposé précédemment, l'organe de commande 7 est préférentiellement agencé pour que sa position de verrouillage et décompression soit une position prédéterminée, c'est-à-dire préétablie et parfaitement identifiée en tant que telle pour l'utilisateur. Cette disposition facilite l'usage de l'appareil par l'utilisateur, qui sait ainsi parfaitement, et de façon sûre, lorsqu'il place l'organe de commande dans la position prédéterminée de verrouillage et décompression, que l'appareil est complètement verrouillé tandis que le moyen de décompression est complètement activé, c'est-à-dire que la section de fuite de vapeur de l'intérieur de l'enceinte vers l'extérieur est maximale ou du moins optimale. Il est tout à fait envisageable que le moyen de décompression 6 présente plusieurs positions de fuite, l'activation du moyen de décompression correspondant alors à l'une de ces positions de fuite, qui n'est d'ailleurs pas forcément celle autorisant une section de fuite de vapeur maximale. En d'autres termes, l'activation du moyen de décompression 6 correspond, au sens de l'invention, à une mise en communication de l'intérieur de l'enceinte avec l'extérieur, quel que soit le débit de fuite.

Ainsi, l'appareil de cuisson conforme à l'invention permet à l'utilisateur, en un geste unique de manipulation d'un seul et même organe de commande 7, d'enclencher la décompression de l'appareil en maintenant le couvercle verrouillé, alors même que l'organe de commande 7 commande également le verrouillage / déverrouillage.

Avantageusement, l'organe de commande unique 7 est conçu pour être également susceptible de se trouver dans une position, de préférence prédéterminée, de déverrouillage et décompression, dans laquelle ledit organe de commande 7 coopère avec le moyen de verrouillage / déverrouillage 3 et le moyen de décompression de façon à ce que le moyen de verrouillage / déverrouillage se trouve dans sa position de déverrouillage, tandis que le moyen de décompression est activé.

Cette position de déverrouillage et décompression permet la séparation totale de la cuve 1 et du couvercle 2.

Avantageusement, l'organe de commande unique 7 est également conçu pour être susceptible de se trouver dans une position, de préférence prédéterminée, de verrouillage sensiblement étanche, dans laquelle ledit organe de commande 7 coopère avec le moyen de verrouillage / déverrouillage 3 et le moyen de décompression, de façon à ce que le moyen de verrouillage / déverrouillage 3 se trouve dans sa position de verrouillage, tandis que le moyen de décompression 6 est désactivé.

Cette position de verrouillage sensiblement étanche correspond à la configuration de l'appareil permettant la cuisson.

Ainsi, l'organe de commande 7 pourra avantageusement évoluer entre les trois positions prédéterminées suivantes :
- une position (a) de déverrouillage et décompression,
- une position (b) de verrouillage et décompression,
- une position (c) de verrouillage sensiblement étanche.

De manière préférentielle, l'organe de commande 7 présente un caractère séquentiel, c'est-à-dire qu'il est conçu pour n'autoriser que les séquences de changement de position suivantes :
- passage de la position (a) à la position (b),
- passage de la position (b) à la position (c),
- passage de la position (c) à la position (b),
- passage de la position (b) à la position (a).

En particulier, le passage de la position (c) à la position (a), ainsi que le passage de la position (a) à la position (c) s'effectuera en passant par la position (b), sans forcément s'y arrêter si les conditions de pression dans l'enceinte le permettent.

Cela permet notamment de prémunir l'utilisateur d'une ouverture directe du couvercle, sans décompression, alors que le niveau de pression régnant au sein de l'enceinte est incompatible avec une ouverture sécurisée de l'appareil.

Avantageusement, l'organe de commande 7 est conçu pour que lorsqu'il passe de sa position de verrouillage sensiblement étanche (c) à sa position de verrouillage et décompression (b), il n'engendre sensiblement aucun déplacement du moyen de verrouillage / déverrouillage 3. En d'autres termes, le déplacement de l'organe de commande 7 de sa position (c) à sa position (b) entraîne uniquement l'activation du moyen de décompression 6, et ne génère sensiblement aucune contrainte de déplacement sur le moyen de verrouillage / déverrouillage 3.

Avantageusement, l'organe de commande 7 est monté en rotation relativement au couvercle 2, de préférence selon l'axe X-X'.

L'organe de commande 7 comprend de manière préférentielle une plaque intermédiaire rotative 7A dont le mouvement de rotation est contrôlé à l'aide d'un moyen de manoeuvre 7B actionnable manuellement par l'utilisateur, du genre poignée.

La poignée 7B est de préférence directement fixée à la plaque intermédiaire 7A, par l'intermédiaire de quilles de fixation 8, 9, de façon à réaliser un encastrement mécanique entre la poignée 7B et la plaque intermédiaire 7A, ce qui revient à interdire tout déplacement angulaire relatif entre la poignée 7B et la plaque 7A (entraînement direct).

Il est cependant tout à fait envisageable, sans pour autant sortir du cadre de l'invention, que soit prévue une interface mécanique (non représentée), par exemple de démultiplication ou de surmultiplication, entre la poignée 7B et la plaque intermédiaire 7A.

Il est également envisageable de prévoir, en lieu et place d'un organe de manoeuvre rotatif 7B, un organe de manoeuvre susceptible de se déplacer en translation, ledit mouvement de translation étant transformé, par l'intermédiaire d'une interface mécanique *ad hoc* (crémaillère, rampe, biellette), en un mouvement de rotation entraînant la plaque intermédiaire 7A.

Tel que cela est représenté aux figures, la plaque rotative 7A peut avantageusement être montée dans un siège 26 destiné à être lui-même monté sur le couvercle 2. Le siège 26 est de plus destiné à coopérer avec un carter 24 supérieur, lequel vient coiffer périphériquement la plaque 7A (cf. figure 1).

L'association du carter 24 et du siège 26 forme ainsi un boîtier unitaire monobloc, renfermant notamment la plaque intermédiaire 7A. Ce boîtier peut préférentiellement présenter un caractère amovible, c'est-à-dire qu'il peut être monté et démonté du couvercle 2 à volonté, en vue d'un passage du couvercle 2 au lave-vaisselle par exemple.

Avantageusement, l'organe de commande 7 est relié fonctionnellement au moyen d'entraînement 4A, 5A correspondant à chaque mâchoire 4, 5, de façon à régir le déplacement dudit moyen d'entraînement 4A, 5A, lequel est de préférence constitué, ainsi qu'on l'a vu précédemment, d'un bras entraîneur 4A, 5A venant de matière avec la mâchoire correspondante 4, 5.

De façon préférentielle, chaque bras entraîneur 4A, 5A présente d'une part une extrémité externe reliée à l'élément de verrouillage, à savoir par exemple la mâchoire 4, 5 correspondante, et d'autre part une extrémité interne pourvue d'un ergot axial de guidage 4B, 5B destiné à coopérer fonctionnellement avec l'organe de commande 7, par exemple par coopération de force avec ce dernier.

Les bras entraîneurs 4A, 5A sont préférentiellement montés directement sur le couvercle 2, et peuvent présenter, vers leur extrémité interne, une longueur suffisante, de manière à pouvoir être superposés, au moins en partie, lors de leur déplacement radial. Dans ce cas, les bras entraîneurs 4A, 5A sont autoguidés radialement l'un dans l'autre, un premier bras formant le bras mâle, l'autre formant le bras femelle, le bras mâle coulissant dans le bras femelle.

De manière préférentielle, le guidage du mouvement linéaire et radial des bras entraîneurs 4A, 5A est cependant assuré par des moyens de guidage supplémentaires qui sont solidaires du couvercle 2. Dans une variante préférentielle, les moyens de guidage supplémentaires sont formés par une pièce de guidage 10 qui enserre les bras entraîneurs 4A, 5A sur une partie de leur longueur à proximité de leur extrémité interne. De cette façon, chaque bras entraîneur 4A, 5A est guidé en translation relativement au couvercle 2.

Avantageusement, l'organe de commande 7, et plus précisément la plaque intermédiaire 7A, comprend au moins une rampe de déverrouillage 11A, 11B associée à chaque bras entraîneur 4A, 4B.

Ladite au moins une rampe de déverrouillage 11A, 11B est agencée de façon à ce que lorsque l'organe de commande 7 tourne, sous l'action de l'utilisateur, de sa position de verrouillage et décompression à sa position de déverrouillage et décompression, la rampe de déverrouillage 11A, 11B engage l'ergot axial 4B, 5B et le pousse vers l'extérieur de l'appareil, ce qui engendre la translation radiale du moyen d'entraînement 4A, 5A de la position de verrouillage du couvercle à la position de déverrouillage du couvercle.

Avantageusement, l'organe de commande 7 comprend également au moins une rampe de verrouillage 12A, 12B associée à chaque bras entraîneur 4A, 5A. Ladite au moins une rampe de verrouillage 12A, 12B est agencée de façon à ce que lorsque l'organe de commande 7 tourne, sous l'action de l'utilisateur, de sa position de déverrouillage et décompression à sa position de verrouillage et décompression, la rampe de verrouillage 12A, 12B engage l'ergot axial de guidage correspondant 4B, 5B et le pousse horizontalement vers l'intérieur de l'appareil, ce qui engendre la translation radiale du moyen d'entraînement correspondant 4A, 5A de la position de déverrouillage du couvercle à la position de verrouillage du couvercle.

Tel que cela est représenté aux figures, les rampes de verrouillage 12A, 12B et de déverrouillage 11A, 11B s'étendent ainsi longitudinalement dans un plan horizontal, si l'on considère que la direction verticale est définie par l'axe X-X', et en oblique par rapport à la direction radiale.

Avantageusement, chaque ergot axial de guidage 4B, 5B est formé par un pion s'étendant sensiblement dans la direction axiale, tandis que les rampes de déverrouillage 11A, 11B et de verrouillage 12A, 12B sont obtenues en ménageant un orifice oblong correspondant 14, 15 dans l'épaisseur de la plage 7A, selon une direction oblique par rapport à la direction radiale, ledit orifice oblong 14, 15 étant destiné à accueillir l'ergot axial de guidage correspondant 4B, 5B.

On comprend ainsi que l'organe de commande 7 permet de commander de façon positive et réversible le passage du moyen de verrouillage / déverrouillage 3 de sa position de déverrouillage à sa position de verrouillage, et vice-versa.

Avantageusement, chaque rampe de verrouillage 12A, 12B est prolongée par un moyen de maintien en position 13A, 13B de l'ergot axial correspondant 4B, 5B, ledit moyen de maintien 13A, 13B étant agencé de façon à ce que lorsque l'organe de commande 7 tourne, sous l'action de l'utilisateur, de sa position de verrouillage et décompression (respectivement de verrouillage sensiblement étanche) à sa position de verrouillage sensiblement étanche (respectivement de verrouillage et décompression), l'ergot axial correspondant 4B, 5B et donc le moyen d'entraînement correspondant 4A, 5A sont sensiblement maintenus immobiles dans la position de verrouillage du couvercle.

De manière préférentielle, ledit au moins un moyen de maintien en position 13A, 13B pourra se présenter sous la forme d'un orifice en forme d'arc de cercle 16, 17, ménagé dans l'épaisseur de la plaque 7A, et prolongeant l'orifice oblong 14, 15 correspondant.

Chaque orifice en arc de cercle 16, 17 créant le moyen de maintien 13A, 13B a son centre géométrique confondu avec le centre de rotation de l'organe de commande 7, lequel appartient à l'axe de symétrie général X-X'.

Avantageusement, la soupape de régulation de pression 6 comprend un moyen d'engagement activable 6A qui, lorsqu'il est activé, permet de placer la soupape de régulation 6 en position de fuite, de sorte que ladite soupape est bi-fonctionnelle, puisqu'elle forme également moyen de décompression activable.

Plus précisément, le moyen d'engagement 6A permet, lorsqu'il est activé, de placer positivement, par une contrainte mécanique, la soupape 6 en position de fuite. Cette disposition, qui est d'ailleurs indépendante des autres caractéristiques décrites ici, diffère des mesures techniques adoptées dans l'art antérieur, lesquelles prévoient généralement de jouer sur le tarage de la soupape, en diminuant par exemple la force de rappel de la soupape (par relaxation d'un ressort par exemple), de façon à la rendre sensible à un niveau de pression très inférieur à la pression de fonctionnement.

Au contraire, l'invention ne diminue pas la force de rappel, mais lui oppose une force opposée d'intensité supérieure, suffisante pour garantir la mise en communication instantanée et permanente de l'intérieur de l'enceinte avec l'extérieur. Une telle disposition permet d'assurer une décompression rapide et complète.

Le moyen d'engagement activable 6A pourra se présenter sous la forme d'une tige épaulée s'étendant dans la direction axiale, ledit épaulement formant tête d'activation.

Avantageusement, l'organe de commande 7, et plus particulièrement la plaque intermédiaire 7A, comprend une rampe de décompression 18 destinée à coopérer avec le moyen d'engagement 6A, de façon à ce que lorsque l'organe de commande 7 tourne, sous l'action de l'utilisateur, de sa position de verrouillage sensiblement étanche à sa position de verrouillage et décompression, la rampe de décompression engage le moyen d'engagement 6A et le pousse axialement vers le haut, ce qui engendre le déplacement de la soupape de régulation de pression 6 de sa position d'étanchéité à sa position de fuite.

De façon préférentielle, la rampe de décompression 18 fait saillie de la plaque 7A vers l'extérieur de l'enceinte dans la direction axiale et se présente sous la forme de deux plans inclinés relativement à l'horizontale, et destinés à engager la tête du moyen d'engagement 6A, lesdits plans inclinés étant séparés par une encoche réalisée dans toute l'épaisseur de la plaque 7A, de façon à autoriser le passage de la tige du moyen d'engagement 6A.

Avantageusement, la rampe de décompression 18 est prolongée par un moyen de maintien en position 19 du moyen d'engagement 6A, ledit moyen de maintien 19 étant agencé de façon à ce que lorsque l'organe de commande 7 tourne, sous l'action de l'utilisateur, de sa position de verrouillage et décompression (respectivement de déverrouillage et décompression) à sa position de déverrouillage et décompression (respectivement de verrouillage et décompression), le moyen d'engagement 6A est maintenu en position activée, ce qui correspond au maintien de la soupape de régulation 6 en position de fuite, c'est-à-dire que le moyen de décompression reste activé.

De façon préférentielle, le moyen de maintien en position 19 du moyen d'engagement 6A est constitué par un plan d'appui sensiblement horizontal (c'est-à-dire d'altitude constante) sur lequel est destinée à s'appuyer la tête du moyen d'engagement 6A, ledit plan permettant de maintenir le moyen d'engagement 6A à l'altitude maximum qu'il a atteinte après avoir été soumis à l'action de la rampe de décompression 18.

De plus, la rampe de décompression 18, tout comme le moyen de maintien 19, s'étendent dans le plan horizontal selon un arc de cercle dont le centre est confondu avec le centre de rotation de la plaque intermédiaire 7A. Cela leur permet d'agir uniquement dans la direction axiale sur le moyen d'engagement 6A, sans solliciter ce dernier dans une autre direction, notamment radiale.

Il est cependant tout à fait envisageable, sans pour autant sortir du cadre de l'invention, que la rampe de décompression 18 ne soit pas prolongée par un moyen de maintien 19, mais au contraire par une rampe, de façon à déplacer la soupape de régulation de sa position de fuite à une position permettant par exemple un débit de fuite encore plus important.

Dans ce cas, le passage de l'organe de commande 7 de sa position de verrouillage sensiblement étanche à sa position de verrouillage et décompression permet de placer la soupape 6 dans une première position de fuite, tandis que le passage de la position de verrouillage et décompression à la position de déverrouillage et décompression permet de placer la soupape 6 dans une deuxième position de fuite, qui se distingue de la première position de fuite par son niveau de débit de fuite.

Avantageusement, l'appareil de cuisson conforme à l'invention comprend un moyen de sécurité à l'ouverture 20 sensible à la pression et/ou à la température régnant dans l'enceinte de cuisson.

Avantageusement, le moyen de sécurité à l'ouverture 20 est conçu pour interagir avec le moyen de verrouillage / déverrouillage 3, de façon à interdire le déverrouillage du couvercle 2 relativement à la cuve 1 lorsque la pression régnant dans l'enceinte est supérieure à une valeur prédéterminée, dite pression de sécurité à l'ouverture, et/ou lorsque la température régnant dans l'enceinte est supérieure à une valeur prédéterminée, dite température de sécurité à l'ouverture.

De façon préférentielle, le moyen de sécurité à l'ouverture 20 est conçu pour empêcher le passage de l'organe de commande 7 de sa position de verrouillage et décompression à sa position de déverrouillage et décompression tant que la pression régnant dans l'enceinte est supérieure à la pression de sécurité et/ou tant que la température régnant dans l'enceinte est supérieure à la température de sécurité.

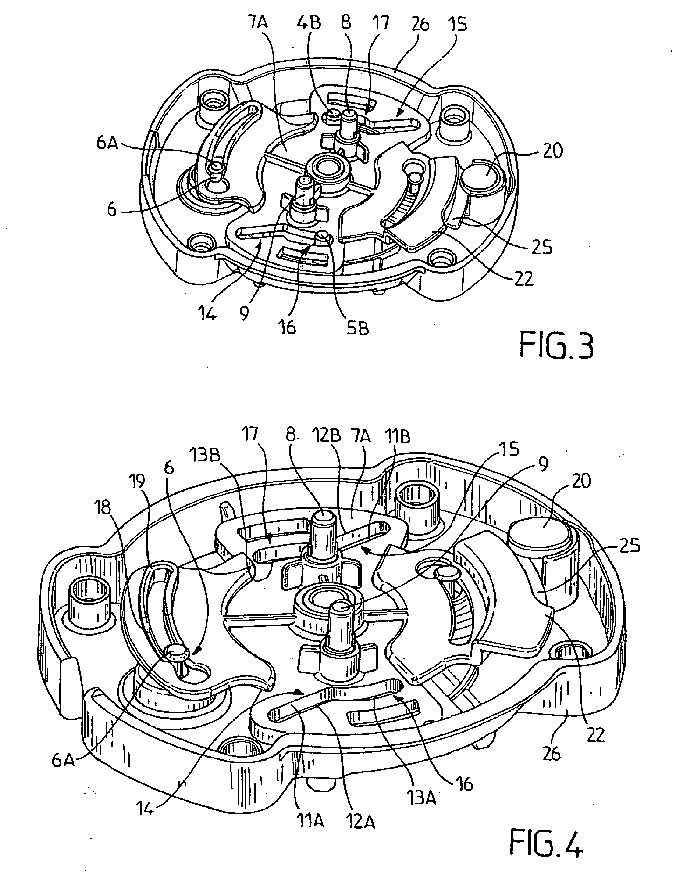

Avantageusement, le moyen de sécurité à l'ouverture 20 comprend une tige manométrique sensible à la pression régnant dans l'enceinte, et montée mobile en regard d'un perçage 21 ménagé dans le couvercle 2, entre une position basse, dans laquelle la tige 20 autorise le verrouillage / déverrouillage du couvercle 2 relativement à la cuve 1, et une position haute (représentée aux figures 3 à 5) dans laquelle la tige 20 interagit avec le moyen de verrouillage / déverrouillage 3 pour empêcher le déverrouillage du couvercle 2 relativement à la cuve 1.

Un tel moyen de sécurité à l'ouverture est bien connu dans son principe général. Il permet une sécurité positive à l'ouverture en autorisant la désolidarisation du couvercle 2 relativement à la cuve 1 uniquement lorsque le niveau de pression régnant dans l'enceinte atteint un niveau acceptable du point de vue de la sécurité de l'utilisateur.

De façon préférentielle, la tige manométrique 20 et l'organe de commande 7 sont agencés l'un relativement à l'autre de façon à ce que la tige manométrique, lorsqu'elle est en position haute, empêche toute rotation de l'organe de commande 7 de sa position de verrouillage et décompression à sa position de déverrouillage et décompression.

A cette fin, la plaque intermédiaire 7A comprend un rebord 22 susceptible de venir en appui contre l'extrémité supérieure de la tige manométrique 20 lorsque l'organe de commande 7 tourne vers sa position de déverrouillage et décompression.

De façon avantageuse, la tige manométrique 20 est conçue pour être maintenue en position haute sous l'effet de la pression régnant dans l'enceinte lorsque cette pression atteint une valeur relative, dite pression de montée, comprise entre sensiblement 1,5 et 4 kPa.

De façon préférentielle, la tige 20 est conçue pour que la pression de montée soit sensiblement égale à 3 kPa ± 0,5 kPa.

De façon encore plus avantageuse, la pression de montée est sensiblement égale à 3,3 kPa.

Avantageusement, la tige manométrique 20 est conçue pour descendre vers sa position basse lorsque la pression à l'intérieur de l'enceinte atteint une valeur relative, dite pression de descente, comprise entre sensiblement 1 et 4 kPa, ladite pression de descente étant de surcroît sensiblement inférieure à la pression de montée.

De façon préférentielle, la pression de descente est sensiblement comprise entre 1,5 et 4 kPa, et de manière encore plus préférentielle entre 1,5 et 2 kPa, ou par exemple sensiblement égale à 2,5 kPa ± 0,5 kPa.

De manière générale, on cherchera, dans le cadre de l'invention, à dimensionner et conformer la tige manométrique 20 de façon à ce que la pression de descente, tout en étant inférieure à la pression de montée, soit la plus proche possible de la pression de montée.

La tige manométrique 20 sera également conçue pour que sa pression de descente soit la plus élevée possible, dans la limite des normes en vigueur, lesquelles prescrivent à ce jour un seuil de 4 kPa à ne pas dépasser pour la pression de descente. Le choix d'une pression de descente élevée, comprise par exemple entre 1 et 4 kPa, permet de pouvoir ouvrir plus rapidement le couvercle 2 de l'appareil de cuisson, en comparaison avec les autocuiseurs de l'art antérieur, dont la pression de descente n'excède pas en général 0,5 kPa.

En revanche, l'obtention d'une pression de descente élevée va généralement de pair avec un alourdissement de la tige manométrique 20.

Cet alourdissement s'oppose bien évidemment à une montée rapide de la tige manométrique 20 vers sa position haute lors de la montée en pression de l'appareil, ce qui peut ralentir le cycle de cuisson.

C'est pourquoi on prévoit avantageusement, dans le cadre de l'invention, d'équiper l'appareil d'un moyen d'actionnement 25 de la tige 20, ledit moyen d'actionnement étant agencé pour permettre de placer la tige 20 en position haute, quelle que soit la valeur de la pression régnant dans l'enceinte.

De cette façon, c'est le moyen d'actionnement 10 lui-même qui, de façon mécanique, va forcer la tige 20 vers sa position haute, laquelle position haute est de préférence une position étanche grâce à la présence d'un joint d'étanchéité (non représenté) contre lequel vient appuyer la tige 20 pour réaliser une fermeture étanche.

Afin d'imposer la montée de la tige manométrique 20 en position haute lors du verrouillage du couvercle, l'organe de commande 20 comprend une rampe de démarrage rapide de cuisson formant moyen d'actionnement 25, ladite rampe 25 étant agencée de façon à ce que lorsque l'organe de commande 7 tourne, sous l'action de l'utilisateur, de sa position de verrouillage et décompression à sa position de verrouillage sensiblement étanche, la rampe de démarrage rapide de cuisson 25 engage la tige manométrique 20 et l'entraîne, en la poussant, de sa position basse à sa position haute.

Tel que cela est représenté notamment aux figures 3 à 5, la rampe 25 fait saillie de la plaque 7A, et s'étend dans un plan vertical en direction de l'intérieur de l'enceinte, et en oblique relativement à la direction axiale X-X'.

De manière avantageuse, le moyen de sécurité à l'ouverture 20 est par ailleurs relié fonctionnellement à un moyen de signalisation pour indiquer à l'utilisateur s'il lui est possible ou non d'ouvrir le couvercle 2.

De façon préférentielle, le moyen de signalisation est de caractère visuel et est avantageusement constitué par le sommet de la tige manométrique 20 lui-même qui, selon sa position (haute ou basse), va apparaître ou non aux yeux de l'utilisateur par le biais d'une ouverture 23 ménagée dans le carter de protection 24.

Cette disposition permet à l'utilisateur de procéder sans délai au déverrouillage du couvercle 2, puisqu'il est informé de l'instant même où les conditions de pression régnant dans l'enceinte deviennent compatibles avec un déverrouillage sécurisé.

On va maintenant décrire le fonctionnement de l'appareil de cuisson conforme à l'invention.

En premier lieu, l'utilisateur place des aliments dans la cuve 1, c'est-à-dire directement dans celle-ci ou indirectement, par l'intermédiaire d'un panier amovible contenu dans la cuve 1.

L'utilisateur rapporte ensuite le couvercle 2 sur la cuve 1. A cet instant, l'organe de commande unique 7 est en position de déverrouillage et décompression. L'utilisateur imprime ensuite un mouvement de rotation à l'organe de commande 7 dans le sens horaire jusqu'à atteindre une position de butée correspondant à la position de verrouillage sensiblement étanche de l'appareil. En passant de sa position de déverrouillage et décompression à sa position de verrouillage étanche, l'organe de commande est également passé par la position de verrouillage et décompression, mais sans s'y arrêter sensiblement.

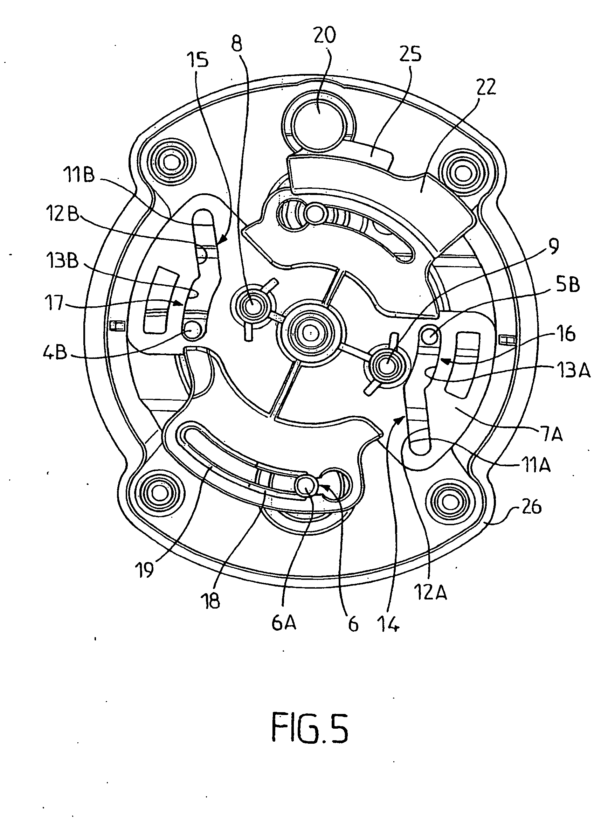

L'organe de commande étant placé en position de verrouillage sensiblement étanche (représenté à la figure 5), l'appareil de cuisson est soumis à un appareil de chauffe, du genre plaque de cuisson, et peut ainsi monter en pression jusqu'à atteindre sa pression de fonctionnement, laquelle est régulée par la soupape de régulation 6.

A l'issue du cycle de cuisson, l'utilisateur va imprimer à l'organe de commande 7 un mouvement de rotation dans le sens anti-horaire, jusqu'à ce que le rebord 22 vienne en butée contre la tige manométrique de sécurité 20, qui se trouve en position haute.

A cet instant, l'organe de commande se trouve en position de verrouillage et décompression.

Puis, lorsque la pression interne régnant dans l'enceinte descend en dessous de la pression de descente, la tige manométrique 20 retourne dans sa position basse.

L'utilisateur est alors en mesure de tourner à nouveau la poignée 7B en sens anti-horaire jusqu'à l'atteinte de la position de butée de déverrouillage et décompression, ce qui lui permet d'ouvrir le couvercle en toute sécurité.

## Revendications

1. - Appareil domestique de cuisson d'aliments sous pression comprenant :
- une cuve (1) et un couvercle (2) destiné à être rapporté et verrouillé sur ladite cuve (1) pour former une enceinte de cuisson sensiblement étanche,
- un moyen de verrouillage / déverrouillage (3) à mâchoires ou segments, susceptible d'évoluer entre une position de verrouillage du couvercle (2) relativement à la cuve (1) et une position de déverrouillage,
- un moyen de décompression de l'enceinte (6), activable quel que soit le niveau de pression régnant dans l'enceinte,
**caractérisé en ce que** lesdits moyen de verrouillage / déverrouillage (3) et moyen de décompression (6) sont chacun reliés fonctionnellement à un organe de commande (7, 7A, 7B) unique et commun, ledit organe de commande (7, 7A, 7B) permettant de commander le verrouillage /déverrouillage du couvercle (2) sur la cuve (1) ainsi que la décompression de l'enceinte.

2. - Appareil selon la revendication 1 **caractérisé en ce que** l'organe de commande (7, 7A, 7B) est conçu pour être susceptible de se trouver dans une position prédéterminée de verrouillage et décompression, dans laquelle ledit organe de commande (7, 7A, 7B) coopère avec le moyen de verrouillage / déverrouillage (3) et le moyen de décompression (6) de façon à ce que le moyen de verrouillage / déverrouillage se trouve dans sa position de verrouillage, tandis que le moyen de décompression est activé.

3. - Appareil selon la revendication 1 ou 2 **caractérisé en ce que** l'organe de commande (7, 7A, 7B) est conçu pour être susceptible de se trouver dans une position de déverrouillage et décompression, dans laquelle ledit organe de commande (7, 7A, 7B) coopère avec le moyen de verrouillage / déverrouillage (3) et le moyen de décompression (6) de façon à ce que le moyen de verrouillage / déverrouillage (3) se trouve dans sa position de déverrouillage, tandis que le moyen de décompression (6) est activé.

4. - Appareil selon l'une des revendications 1 à 3 **caractérisé en ce que** l'organe de commande (7, 7A, 7B) est conçu pour être susceptible de se trouver dans une position de verrouillage sensiblement étanche, dans laquelle ledit organe de commande (7, 7A, 7B) coopère avec le moyen de verrouillage / déverrouillage (3) et le moyen de décompression (6) de façon à ce que le moyen de verrouillage / déverrouillage (3) se trouve dans sa position de verrouillage, tandis que le moyen de décompression (6) est désactivé.

5. - Appareil selon les revendications 2 et 4 **caractérisé en ce que** l'organe de commande (7, 7A, 7B) est conçu pour que lorsqu'il passe de sa position de verrouillage sensiblement étanche à sa position de verrouillage et décompression, il n'engendre sensiblement aucun déplacement du moyen de verrouillage / déverrouillage (3).

6. - Appareil selon l'une des revendications 1 à 5 **caractérisé en ce que** l'organe de commande (7, 7A, 7B) est monté en rotation relativement au couvercle (2).

7. - Appareil selon l'une des revendications 1 à 6 **caractérisé en ce que** le moyen de verrouillage / déverrouillage (3) comprend au moins un élément de verrouillage (4, 5) du couvercle (2) relativement à la cuve (1), ledit au moins un élément (4, 5) étant monté mobile en translation radiale relativement au couvercle (2), par l'intermédiaire d'un moyen d'entraînement correspondant (4A, 5A), entre la position de verrouillage et la position de déverrouillage.

8. - Appareil selon la revendication 7 **caractérisé en ce que** l'organe de commande (7, 7A, 7B) est relié fonctionnellement au moyen d'entraînement (4A, 5A), de façon à régir le déplacement de ce dernier.

9. - Appareil selon la revendication 8 **caractérisé en ce que** le moyen d'entraînement (4A, 5A) comprend au moins un bras entraîneur guidé en translation relativement au couvercle (2) et présentant d'une part une extrémité externe reliée à la mâchoire (4, 5), .et d'autre part une extrémité interne pourvue d'un ergot axial de guidage (4B, 5B) destiné à coopérer fonctionnellement avec l'organe de commande (7, 7A, 7B).

10. -Appareil selon les revendications 2, 3, 6 et 9 **caractérisé en ce que** l'organe de commande (7, 7A, 7B) comprend au moins une rampe de déverrouillage (11 A, 11 B) agencée de façon à ce que lorsque l'organe de commande (7, 7A, 7B) tourne de sa position de verrouillage et décompression à sa position de déverrouillage et décompression, la rampe de déverrouillage (11 A, 11 B) engage l'ergot axial de guidage correspondant (4B, 5B) et le pousse, ce qui engendre la translation du moyen d'entraînement (4A, 5A) de la position de verrouillage du couvercle (2) à la position de déverrouillage du couvercle (2).

11. -Appareil selon les revendications 2, 3, 6 et 9 ou selon la revendication 10 **caractérisé en ce que** l'organe de commande (7, 7A, 7B) comprend au moins une rampe de verrouillage (12A, 12B) agencée de façon à ce que lorsque l'organe de commande (7, 7A, 7B) tourne de sa position de déverrouillage et décompression à sa position de verrouillage et décompression, la rampe de verrouillage (12A, 12B) engage l'ergot axial de guidage correspondant (4B, 5B) et le pousse, ce qui engendre la translation du moyen d'entraînement (4A, 5A) de la position de déverrouillage du couvercle (2) à la position de verrouillage du couvercle (2).

12. - Appareil selon les revendications 2, 4 et 11 **caractérisé en ce que** la rampe de verrouillage (12A, 12B) est prolongée par un moyen de maintien (13A, 13B) en position de l'ergot axial (4B, 5B), ledit moyen de maintien (13A, 13B) étant agencé de façon à ce que lorsque l'organe de commande (7) tourne de sa position de verrouillage et décompression, respectivement de verrouillage sensiblement étanche, à sa position de verrouillage sensiblement étanche, respectivement de verrouillage et décompression, l'ergot axial (4B, 5B) et donc le moyen d'entraînement (4A, 5A) sont sensiblement maintenus immobiles en position de verrouillage du couvercle (2).

13. -Appareil selon l'une des revendications 1 à 12 **caractérisé en ce qu'**il comprend un moyen de régulation de pression (6), agencé pour maintenir la pression relative régnant dans l'enceinte à une valeur prédéterminée sensiblement constante dite pression de fonctionnement.

14. - Appareil selon la revendication 13 **caractérisé en ce que** le moyen de régulation de pression (6) comprend une soupape de régulation sensible à la pression régnant dans l'enceinte et qui est montée mobile entre au moins :
- une position de butée et de rappel élastique, dite position d'étanchéité, dans laquelle elle ferme la communication de l'enceinte avec l'extérieur tant que la pression régnant dans l'enceinte est sensiblement inférieure ou égale à la pression de fonctionnement,
- et au moins une position de fuite dans laquelle elle met en communication l'intérieur de l'enceinte avec l'extérieur dès que la pression à l'intérieur de l'enceinte dépasse la pression de fonctionnement.

15. -Appareil selon la revendication 14 **caractérisé en ce que** la soupape de régulation (6) comprend un moyen d'engagement activable (6A), qui, lorsqu'il est activé, permet de placer la soupape de régulation (6) en position de fuite, de sorte que ladite soupape (6) forme également moyen de décompression activable.

16. - Appareil selon les revendications 2, 4, 6 et 15 **caractérisé en ce que** l'organe de commande (7, 7A, 7B) comprend une rampe de décompression (18) destinée à coopérer avec le moyen d'engagement (6A), de façon à ce que lorsque l'organe de commande (7, 7A, 7B) tourne de sa position de verrouillage sensiblement étanche à sa position de verrouillage et décompression, la rampe de décompression (18) engage le moyen d'engagement (6A) et le pousse, ce qui engendre le déplacement de la soupape (6) de sa position d'étanchéité à sa position de fuite.

17. -Appareil selon l'une des revendications 1 à 16 **caractérisé en ce qu'**il comprend un moyen de sécurité (20) à l'ouverture sensible à la pression et/ou à la température régnant dans l'enceinte.

18. -Appareil selon la revendication 17 **caractérisé en ce que** le moyen de sécurité à l'ouverture (20) est conçu pour interagir avec le moyen de verrouillage / déverrouillage (3), de façon à interdire le déverrouillage du couvercle (2) relativement à la cuve (1) lorsque la pression régnant dans l'enceinte est supérieure à une valeur prédéterminée dite pression de sécurité à l'ouverture et/ou lorsque la température régnant dans l'enceinte est supérieure à une valeur prédéterminée dite température de sécurité à l'ouverture.

19. - Appareil selon les revendications 2, 3 et 18 **caractérisé en ce que** le moyen de sécurité à l'ouverture (20) est conçu pour empêcher le passage de l'organe de commande (7, 7A, 78) de sa position de verrouillage et décompression à sa position de déverrouillage et décompression tant que la pression régnant dans l'enceinte est supérieure à la pression de sécurité et/ou tant que la température régnant dans l'enceinte est supérieure à la température de sécurité.

20. - Appareil selon l'une des revendications 17 à 19 **caractérisé en ce que** le moyen de sécurité (20) à l'ouverture comprend une tige manométrique (20) montée mobile entre une position basse, dans laquelle elle autorise le verrouillage / déverrouillage du couvercle (2) relativement à la cuve (1), et une position haute, dans laquelle elle interagit avec le moyen de verrouillage / déverrouillage pour empêcher le déverrouillage du couvercle (2) relativement à la cuve (1).

21. -Appareil selon l'une des revendications 1 à 20 **caractérisé en ce qu'**il est constitué par un autocuiseur.

## Claims

1. Domestic appliance for cooking food under pressure comprising:
- a container (1) and a lid (2) intended to be fitted and locked on said container (1) in order to form a substantially sealed cooking vessel;
- a means (3) of locking/unlocking with jaws or segments, capable of changing between a position of locking the lid (2) in relation to the container (1) and an unlocking position;
- a means (6) of decompressing the vessel, able to be activated irrespective of the level of pressure prevailing in the vessel;
**characterised in that** said locking/unlocking means (3) and decompression means (6) are each functionally connected to a single common control member (7, 7A, 7B), said control member (7, 7A, 7B) making it possible to control the locking/unlocking of the lid (2) on the container (1) as well as decompression of the vessel.

2. Appliance according to Claim 1, **characterised in that** the control member (7, 7A, 7B) is designed to be capable of being in a predetermined locking and decompression position, in which said control member (7, 7A, 7B) cooperates with the locking/unlocking means (3) and the decompression means (6) so that the locking/unlocking means is in its locking position, whilst the decompression means is activated

3. Appliance according to Claim 1 or 2, **characterised in that** the control member (7, 7A, 7B) is designed to be capable of being in an unlocking and decompression position, in which said control member (7, 7A, 7B) cooperates with the locking/unlocking means (3) and the decompression means (6) so that the locking/unlocking means (3) is in its unlocking position, whilst the decompression means (6) is activated.

4. Appliance according to one of Claims 1 to 3, **characterised in that** the control member (7, 7A, 7B) is designed to be capable of being in a substantially sealed locking position, in which said control member (7, 7A, 7B) cooperates with the locking/unlocking means (3) and the decompression means (6) so that the locking/unlocking means (3) is in its locking position, whilst the decompression means (6) is deactivated.

5. Appliance according to Claims 2 and 4, **characterised in that** the control member (7, 7A, 7B) is designed so that, when it goes from its substantially sealed locking position to its locking and decompression position, it generates substantially no movement of the locking/unlocking means (3).

6. Appliance according to one of Claims 1 to 5, **characterised in that** the control member (7, 7A, 7B) is mounted rotationally in relation to the lid (2).

7. Appliance according to one of Claims 1 to 6, **characterised in that** the locking/unlocking means (3) comprises at least one element (4, 5) for locking the lid (2) in relation to the container (1), said at least one element (4, 5) being mounted to be able to move in radial translation in relation to the lid (2), by means of a corresponding driving means (4A, 5A), between the locking position and the unlocking position.

8. Appliance according to Claim 7, **characterised in that** the control member (7, 7A, 7B) is functionally connected to the driving means (4A, 5A), so as to govern the movement of the latter.

9. Appliance according to Claim 8, **characterised in that** the driving means (4A, 5A) comprises at least one driving arm guided translationally in relation to the lid (2) and having on the one hand an outer end connected to the jaw (4, 5), and on the other hand an inner end provided with an axial guide pin (4B, 5B) intended to cooperate functionally with the control member (7, 7A, 7B).

10. Appliance according to Claims 2, 3, 6 and 9, **characterised in that** the control **member (7, 7A, 7B) comprises at least one unlocking guide track (11A, 11B)** arranged so that, when the control member (7, 7A, 7B) turns from its locking and decompression position to its unlocking and decompression position, the unlocking guide track (11A, 11B) engages the corresponding axial guide pin (4B, 5B) and pushes it, which generates the translation of the driving means (4A, 5A) from the position of locking the lid (2) to the position of unlocking the lid (2).

11. Appliance according to Claims 2, 3, 6 and 9 or according to Claim 10, **characterised in that** the control member (7, 7A, 7B) comprises at least one locking guide track (12A, 12B) arranged so that, when the control member (7, 7A, 7B) turns from its unlocking and decompression position to its locking and decompression position, the locking guide track (12A, 12B) engages the corresponding axial guide pin (4B, 5B) and pushes it, which generates the translation of the driving means (4A, 5A) from the position of unlocking the lid (2) to the position of locking the lid (2).

12. Appliance according to Claims 2, 4 and 11, **characterised in that** the locking guide track (12A, 12B) is extended by a means (13A, 13B) of holding the axial pin (4B, 5B) in position, said holding means (13A, 13B) being arranged so that, when the control member (7) turns from its locking and decompression, respectively substantially sealed locking, position to its substantially sealed locking, respectively locking and decompression, position, the axial pin (4B, 5B) and therefore the driving means (4A, 5A) are substantially held immovable in the position of locking the lid (2).

13. Appliance according to one of Claims 1 to 12, **characterised in that** it comprises a pressure regulating means (6), arranged to maintain the relative pressure prevailing in the vessel at a substantially constant predetermined value referred to as the operating pressure.

14. Appliance according to Claim 13, **characterised in that** the pressure regulating means (6) comprises a regulating valve sensitive to the pressure prevailing in the vessel and which is mounted to be able to move between at least:
- an abutment and elastic return position, referred to as the sealing position, in which it closes the communication of the vessel with the outside as long as the pressure prevailing in the vessel is substantially less than or equal to the operating pressure;
- and at least one leakage position in which it puts the inside of the vessel in communication with the outside as soon as the pressure inside the vessel exceeds the operating pressure.

15. Appliance according to Claim 14, **characterised in that** the regulating valve (6) comprises an engagement means (6A) that can be activated, which, when it is activated, makes it possible to place the regulating valve (6) in the leakage position, so that said valve (6) also forms a decompression means that can be activated.

16. Appliance according to Claims 2, 4, 6 and 15, **characterised in that** the control member (7, 7A, 7B) comprises a decompression guide track (18) intended to cooperate with the engagement means (6A), so that, when the control member (7, 7A, 7B) turns from its substantially sealed locking position to its locking and decompression position, the decompression guide track (18) engages the engagement means (6A) and pushes it, which generates the movement of the valve (6) from its sealing position to its leakage position.

17. Appliance according to one of Claims 1 to 16, **characterised in that** it comprises a means for safety upon opening (20) which is sensitive to the pressure and/or temperature prevailing in the vessel.

18. Appliance according to Claim 17, **characterised in that** the means for safety upon opening (20) is designed to interact with the locking/unlocking means (3), so as to prevent the unlocking of the lid (2) in relation to the container (1) when the pressure prevailing in the vessel is greater than a predetermined value referred to as the opening safety pressure and/or when the temperature prevailing in the vessel is greater than a predetermined value referred to as the opening safety temperature.

19. Appliance according to Claims 2, 3 and 18, **characterised in that** the means for safety upon opening (20) is designed to prevent the control member (7, 7A, 7B) moving from its locking and decompression position to its unlocking and decompression position as long as the pressure prevailing in the vessel is greater than the safety pressure and/or as long as the temperature prevailing in the vessel is greater than the safety temperature.

20. Appliance according to one of Claims 17 to 19, **characterised in that** the means for safety upon opening (20) comprises a manometric rod (20) mounted able to move between a low position, in which it permits the locking/unlocking of the lid (20) in relation to the container (1), and a high position, in which it interacts with the locking/unlocking means in order to prevent the unlocking of the lid (2) in relation to the container (1).

21. Appliance according to one of Claims 1 to 20, **characterised in that** it is constituted by a pressure cooker.

## Patentansprüche

1. Haushaltsdruckgargerät für Nahrungsmittel, umfassend:
- einen Behälter (1) und einen Deckel (2), der dazu bestimmt ist, auf den Behälter (1) aufgesetzt und auf diesem verriegelt zu werden, um einen im Wesentlichen dichten Garbehälter zu bilden,
- ein Mittel zur Verriegelung/Entriegelung (3) mit Klemmbacken oder Segmenten, das sich zwischen einer Verriegelungsposition des Deckels (2) in Bezug auf den Behälter (1) und einer Entriegelungsposition bewegen kann,
- ein Mittel zur Druckminderung des Behälters (6), das unabhängig von dem im Behälter herrschenden Druckniveau betätigt werden kann,
**dadurch gekennzeichnet, dass** die Verriegelungs-/Entriegelungsmittel (3) und das Druckminderungsmittel (6) jeweils funktional mit einem einzigen und gemeinsamen Steuerelement (7, 7A, 7B) verbunden sind, das es ermöglicht, die Verriegelung/Entriegelung des Deckels (2) auf dem Behälter (1) sowie die Druckminderung des Behälters zu steuern.

2. Gerät nach Anspruch 1, **dadurch gekennzeichnet, dass** das Steuerelement (7, 7A, 7B) derart ausgebildet ist, dass es sich in einer vorbestimmten Verriegelungs- und Druckminderungsposition befinden kann, in der das Steuerelement (7, 7A, 7B) mit dem Verriegelungs-/Entriegelungsmittel (3) und dem Druckminderungsmittel (6) so zusammenwirkt, dass sich das Verriegelungs-/Entriegelungsmittel in seiner Verriegelungsposition befindet, während das Druckminderungsmittel aktiviert ist.

3. Gerät nach Anspruch 1 oder 2, **dadurch gekennzeichnet, dass** das Steuerelement (7, 7A, 7B) derart ausgebildet ist, dass es sich in einer Entriegelungs- und Druckminderungsposition befinden kann, in der das Steuerelement (7, 7A, 7B) miL dem Verriegelungs-/Entriegelungsmittel (3) und dem Druckminderungsmittel (6) so zusammenwirkt, dass sich das Verriegelungs-/Entriegelungsmittel (3) in seiner Entriegelungsposition befindet, während das Druckminderungsmittel (6) aktiviert ist.

4. Gerät nach einem der Ansprüche 1 bis 3, **dadurch gekennzeichnet, dass** das Steuerelement (7, 7A, 7B) derart ausgebildet ist, dass es sich in einer im Wesentlichen dichten Verriegelungsposition befinden kann, in der das Steuerelement (7, 7A, 7B) mit dem Verriegelungs-/Entriegelungsmittel (3) und dem Druckminderungsmittel (6) zusammenwirkt, so dass sich das Verriegelungs-/Entriegelungsmittel (3) in seiner Verriegelungsposition befindet, während das Druckminderungsmittel (6) deaktiviert ist.

5. Gerät nach den Ansprüchen 2 und 4, **dadurch gekennzeichnet, dass** das Steuerelement (7, 7A, 7B) derart ausgebildet ist, dass, wenn es von seiner im Wesentlichen dichten Verriegelungsposition in seine Verriegelungs- und Druckminderungsposition übergeht, es im Wesentlichen keine Verschiebung des Verriegelungs-/Entriegelungsmittels (3) verursacht.

6. Gerät nach einem der Ansprüche 1 bis 5, **dadurch gekennzeichnet, dass** das Steuerelement (7, 7A, 7B) in Bezug zum Deckel (2) drehbar angeordnet ist.

7. Gerät nach einem der Ansprüche 1 bis 6, **dadurch gekennzeichnet, dass** das Verriegelungs-/Entriegelungsmittel (3) mindestens ein Verriegelungselement (4, 5) für den Deckel (2) in Bezug zum Behälter (1) umfasst, wobei das mindestens eine Element (4, 5) in radialer Translation in Bezug zum Deckel (2) mit Hilfe eines entsprechenden Antriebsmittels (4A, 5A) zwischen der verriegelungsposition und der Entriegelungsposition beweglich montiert ist.

8. Gerät nach Anspruch 7, **dadurch gekennzeichnet, dass** das Steuerelement (7, 7A, 7B) funktional mit dem Antriebsmittel (4A, 5A) so verbunden ist, dass es die Verschiebung dieses Letzteren steuert.

9. Gerät nach Anspruch 8, **dadurch gekennzeichnet, dass** das Antriebsmittel (4A, 5A) mindestens einen Antriebsarm umfasst, der in Translation relativ zum Deckel (2) geführt wird und einerseits ein mit der Klemmbacke (4, 5) verbundenes äußeres Ende und andererseits ein inneres Ende aufweist, das mit einem axialen Führungshaken (4_{B}, 5_{B}) versehen ist, der dazu bestimmt ist, funktional mit dem Steuerelement (7, 7A, 7B) zusammenzuwirken.

10. Gerät nach den Ansprüchen 2, 3, 6 und 9, **dadurch gekennzeichnet, dass** das Steuerelement (7, 7A, 7B) mindestens eine Entriegelungsrampe (11A, 11B) umfasst, die derart angeordnet ist, dass, wenn sich das Steuerelement (7, 7A, 7B) von seiner Verriegelungs-und Druckminderungsposition in seine Entriegelungs-und Druckminderungsposition dreht, die Entriegelungsrampe (lla, 11B) den entsprechenden axialen Führungshaken (4B, 5B) einhakt und diesen schiebt, was zur Translation des Antriebsmittels (4A, 5A) von der Verriegelungsposition des Deckels (2) in die Entriegelungsposition des Deckels (2) führt.

11. Gerät nach den Ansprüchen 2, 3, 6 und 9 oder nach Anspruch 10, **dadurch gekennzeichnet, dass** das Steuerelement (7, 7A, 7B) mindestens eine Verriegelungsrampe (12A, 12B) umfasst, die derart angeordnet ist, dass, wenn sich das Steuerelement (7, 7A, 7B) von seiner Entriegelungs- und Druckminderungsposition in seine Verriegelungs- und Druckminderungsposition dreht, die Verriegelungsrampe (12A, 12B) den entsprechenden axialen Führungshaken (4B, 5B) einhakt und diesen schiebt, was zur Translation des Antriebsmittels (4A, 5A) von der Entriegelungsposition des Deckels (2) in die Verriegelungsposition des Deckels (2) führt.

12. Gerät nach den Ansprüchen 2, 4 und 11, **dadurch gekennzeichnet, dass** die Verriegelungsrampe (12A, 12B) durch ein Mittel (13A, 13B) zum Halten des Axialhakens (4B, 5B) in Position verlängert ist, wobei das Haltemittel (13A, 13B) derart angeordnet ist, dass, wenn sich das Steuerelement (7) von seiner Verriegelungs- und Druckminderungsposition bzw. im Wesentlichen dichten Verriegelungsposition in seine im Wesentlichen dichte Verriegelungsposition bzw. Verriegelungs- und Druckminderungsposition dreht, der Axialhaken (4B, 5B) und somit das Antriebsmittel (4A, 5A) im Wesentlichen unbeweglich in Verriegelungsposition des Deckels (2) gehalten werden.

13. Gerät nach einem der Ansprüche 1 bis 12, **dadurch gekennzeichnet, dass** es ein Mittel zur Druckregelung (6) umfasst, das derart angeordnet ist, dass es den in dem Behälter herrschenden relativen Druck auf einem im Wesentlichen konstanten vorbestimmten Wert, Funktionsdruck genannt, hält.

14. Gerät nach Anspruch 13, **dadurch gekennzeichnet, dass** das Druckregelungsmittel (6) ein für den in dem Behälter herrschenden Druck empfindliches Regelventil umfasst, das beweglich montiert ist zwischen mindestens:
- einer Anschlag- und elastischen Rückstellposition, Dichtungsposition genannt, in der es die Verbindung des Behälters mit außen verschließt, solange der in dem Behälter herrschende Druck im Wesentlichen geringer oder gleich dem Funktionsdruck ist,
- und mindestens einer Leckageposition, in der es das Innere des Behälters mit außen in Verbindung bringt, sobald der Druck im Inneren des Behälters den Funktionsdruck überschreitet.

15. Gerät nach Anspruch 14, **dadurch gekennzeichnet, dass** das Regelventil (6) ein aktivierbares Eingriffsmittel (6A) umfasst, das es, wenn es aktiviert ist, ermöglicht, das Regelventil (6) in Leckageposition anzuordnen, so dass das Ventil (6) auch ein aktivierbares DruckminderungsmiLLel bildet.

16. Gerät nach den Ansprüchen 2, 4, 6 und 15, **dadurch gekennzeichnet, dass** das Steuerelement (7, 7A, 7B) eine Druckminderungsrampe (18) umfasst, die dazu bestimmt st, mit dem Eingriffsmittel (6A) zusammenzuwirken, so dass, wenn sich das Steuerelement (7, 7A, 7B) von seiner im Wesentlichen dichten Verriegelungsposition in seine Verriegelungs- und Druckminderungsposition dreht, die Druckminderungsrampe (18) das Eingriffsmittel (6A) einhakt und diese schiebt, was zur Verschiebung des Ventils (6) von seiner Dichtungsposition in seine Leckageposition führt.

17. Gerät nach einem der Ansprüche 1 bis 16, **dadurch gekennzeichnet, dass** es ein Sicherungsmittel (20) bei der Öffnung umfasst, das für den in dem Behälter herrschenden Druck und/oder die Temperatur empfindlich ist.

18. Gerät nach Anspruch 17, **dadurch gekennzeichnet, dass** das Sicherungsmittel bei der Öffnung (20) derart ausgebildet ist, dass es mit dem Verriegelungs-/Entriegelungsmittel (3) zusammenwirkt, um die Entriegelung des Deckels (2) in Bezug zum Behälter (1) zu verbieten, wenn der in dem Behälter herrschende Druck größer als ein vorbestimmter Wert, Sicherheitsdruck bei der Öffnung genannt, ist und/oder wenn die in dem Behälter herrschende Temperatur höher als ein vorbestimmter Wert, Sicherheitstemperatur bei der Öffnung genannt, ist.

19. Gerät nach den Ansprüchen 2, 3 und 18, **dadurch gekennzeichnet, dass** das Sicherheitsmittel bei der Öffnung (20) derart ausgebildet ist, dass es den Übergang des Steuerelements (7, 7A, 7B) von seiner Verriegelungs- und Druckminderungsposition in seine Entriegelungs- und Druckminderungsposition verhindert, solange der in dem Behälter herrschende Druck größer als der Sicherheitsdruck und/oder die in dem Behälter herrschende Temperatur höher als die Sicherheitstemperatur ist.

20. Gerät nach einem der Ansprüche 17 bis 19, **dadurch gekennzeichnet, dass** das Sicherheitsmittel (20) bei der Öffnung eine Manometerstange (20) umfasst, die zwischen einer unteren Position, in der sie die Verriegelung/Entriegelung des Deckels (2) in Bezug zum Behälter (1) gestattet, und einer oberen Position, in der sie mit dem Verriegelungs-/Entriegelungsmittel zusammenwirkt, um die Entriegelung des Deckels (2) in Bezug zum Behälter (1) zu verhindern, beweglich montiert ist.

21. Gerät nach einem der Ansprüche 1 bis 20, **dadurch gekennzeichnet, dass** es von einem Druckkochtopf gebildet ist.
